# EUROPÄISCHE PATENTANMELDUNG

(11) **EP 0 970 636 A1**
(43) Veröffentlichungstag der Anmeldung: **12.01.2000**
(21) Anmeldenummer: 99112663.2
(22) Anmeldetag: 02.07.1999
(51) Int. Cl.: A46B 13/00, B08B 1/04, B60S 3/06

(54) **Arbeitswalze, insbesondere für Fahrzeugwaschanlagen**

(30) Priorität: 08.07.1998 DE 19830514
(71) Anmelder: WESUMAT Fahrzeugwaschanlagen GmbH, D-86156 Augsburg (DE)
(72) Erfinder: Decker, Wolfgang, 86441 Zusmarshausen-Wollbach (DE)
(74) Vertreter: Liebau, Gerhard (DE)

(57) **Zusammenfassung**

Bei einer Arbeitswalze, insbesondere für Fahrzeugwaschanlagen, mit einem rotierend antreibbaren Walzenkern (1) und mit mehreren, axial nebeneinander auf dem Walzenkern angeordneten, diesen konzentrisch umgebenden Arbeitsscheiben (2) aus flexiblem Material, insbesondere aus Schaumstoff, weist jede Arbeitsscheibe eine Vielzahl von Streifen (3) auf, deren in bezug auf die Walzenachse (A) radial inneren Enden (3a) zwischen jeweils zwei den Walzenkern konzentrisch umgebenden Tragscheiben (4) aus Kunststoff eingeklemmt sind. Die beiden Tragscheiben (4) sind durch mehrere parallel zur Scheiben- bzw. Walzenachse (A) angeordnete Bolzen (6) miteinander verbunden. Die beiden Tragscheiben (4) und die Bolzen (6) sind aus Kunststoff gespritzt, wobei die Bolzen (6) mit der dazugehörigen Tragscheibe (4) aus einem Stück bestehen. Die freien Enden (8) zumindest eines Teiles (6) der Bolzen sind in beim Spritzen gebildete Löcher (10) der gegenüberliegenden Tragscheibe einrastbar.

## Beschreibung

Die Erfindung betrifft eine Arbeitswalze, insbesondere für Fahrzeugwaschanlagen, mit einem rotierend antreibbaren Walzenkern und mit mehreren, axial nebeneinander auf dem Walzenkern angeordneten, diesen konzentrisch umgebenden Arbeitsscheiben aus flexiblem Material, wobei jede Arbeitsscheibe eine Vielzahl von Streifen aufweist, die gegebenenfalls im Bereich ihrer inneren Enden in Umfangsrichtung jeweils die größte Breite aufweisen und zu ihren radial äußeren, freien Enden hin verjüngt sind, und deren in Bezug auf die Walzenachse radial inneren Enden oder daran angrenzende Bereiche zwischen jeweils zwei den Walzenkern konzentrisch umgebenden Tragscheiben aus Kunststoff eingeklemmt sind, die durch mehrere parallel zur Scheiben- bzw. Walzenachse angeordnete, in Löcher der Tragscheiben eingreifende Bolzen miteinander verbunden sind.

Bei einer derartigen Arbeitswalze, die in der nicht vorveröffentlichten deutschen Patentanmeldung 197 18 589.4 beschrieben ist, werden die beiden Tragscheiben durch separate Schrauben oder Nieten aus Metall zusammengeklemmt. Da jeweils eine größere Anzahl von Schrauben oder Nieten erforderlich sind, ergibt sich ein verhältnismäßig großer Montageaufwand. Dies gilt auch für den Fall, daß die inneren Enden der Streifen zwischen die Tragscheiben eingeklemmt werden.

Aus der US 3 871 046 ist eine Poliervorrichtung für Fahrzeuge bekannt, bei der zwei wendelförmig gebogene Bleche einen rotierend antreibbaren Walzenkern umgeben. Die radial inneren Enden dieser Bleche sind um 90° umgebogen und mit dem Walzenkern verschraubt. Zwischen den radial äußeren Rändern der Bleche ist ein ebenfalls wendelförmig gebogener Polierkörper mit seinem radial inneren Rand eingeklemmt. Die beiden Bleche sind untereinander durch Schrauben verbunden. Die Herstellung und Montage dieser wendelförmig gebogenen Bleche ist verhältnismäßig aufwendig.

Der Erfindung liegt daher die Aufgabe zugrunde, eine Arbeitswalze, insbesondere für Fahrzeugwaschanlagen, der eingangs erwähnten Art zu schaffen, deren Arbeitsscheiben mit geringerem Arbeitsaufwand kostengünstig herstellbar sind.

Dies wird nach der Erfindung dadurch erreicht, daß die beiden Tragscheiben und die Bolzen aus Kunststoff gespritzt sind, wobei die Bolzen mit der dazugehörigen Tragscheibe aus einem Stück bestehen, und daß die freien Enden zumindest eines Teiles der Bolzen in beim Spritzen gebildete Löcher der gegenüberliegenden Tragscheibe einrastbar sind.

Die Erfindung geht also von dem Gedanken aus, die Tragscheiben und die Bolzen sowie die in den Tragscheiben vorgesehenen Löcher als Kunststoffspritzteil herzustellen. Dies verringert zunächst den Kostenaufwand für die Herstellung der Einzelteile, denn jede Scheibe wird zusammen mit den benötigten Bolzen und Löchern in einem Arbeitsgang hergestellt. Weiterhin wird vor allem der Montageaufwand verringert. Wenn einzelne Streifen verwendet werden, dann brauchen diese nur nacheinander auf die eine Tragscheibe aufgelegt zu werden, wobei die Bolzen als Positionierbolzen dienen können. Es wird dann lediglich noch die andere Scheibe über den Streifen angeordnet und mit der ersten Scheibe zusammengedrückt. Hierbei rasten die freien Enden der Bolzen, soweit sie als Rastbolzen ausgebildet sind, in die Löcher der anderen Tragscheibe ein und die Montage ist damit beendet. Ähnliches gilt, wenn mehrere Streifen mit einem an die inneren Enden der Streifen angrenzenden Ring oder Ringsegment aus einem Stück flexiblem Materials bestehen, d.h. wenn die ganze Arbeitsscheibe oder ein Sektor hiervon aus einem Stück flexiblem Materials, insbesondere Schaumstoff, gestanzt oder gespritzt ist.

Vorteilhafte Ausgestaltungen der Erfindung sind in den Unteransprüchen gekennzeichnet.

Die Erfindung ist in folgendem, anhand eines in der Zeichnung dargestellten Ausführungsbeispieles näher erläutert. Es zeigen:

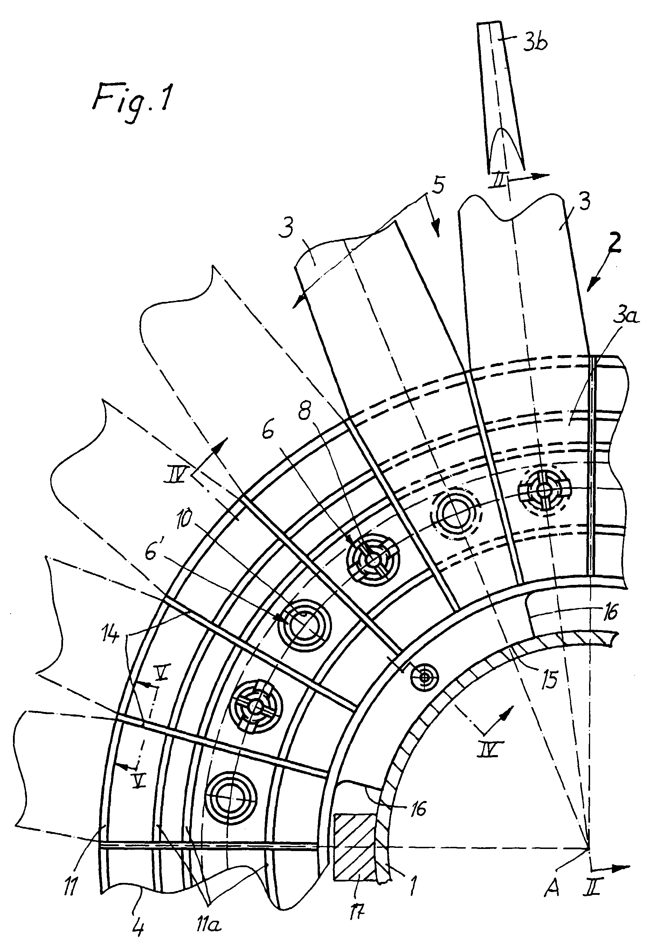

- Figur 1: eine Draufsicht auf einen Teil der Arbeitsscheibe unter Weglassung der einen Tragscheibe,
- Figur 2: einen Radialschnitt nach der Linie II-II der Figur 1,
- Figur 3: einen ähnlichen Radialschnitt unter Weglassung des Streifens,
- Figur 4: einen Radialschnitt nach der Linie IV-IV der Figur 1, ebenfalls unter Weglassung des Streifens,
- Figur 5: einen Teilquerschnitt einer der Tragscheiben nach der Linie V-V der Figur 1,
- Figur 6 und 7: vergrößerte Ausschnitte der Radialschnitte gemäß Figur 3 und 4,
- Figur 8: eine Draufsicht auf einen der Bolzen in Richtung VIII der Figur 6.

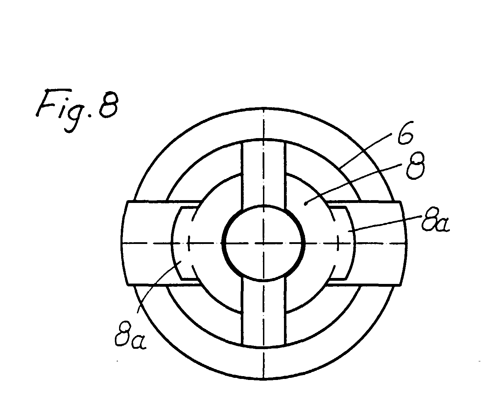

Der generelle Aufbau der Arbeitswalze ist ähnlich wie der in der DE 197 18 589, insbesondere Figur 7 bis 10, gezeigte Aufbau. Auf dem rotierend antreibbaren Walzenkern 1 einer Arbeitswalze für Fahrzeugwaschanlagen oder dgl. sind axial nebeneinander mehrere, den Walzenkern konzentrisch umgebende Arbeitsscheiben 2 angeordnet. Jede dieser Arbeitsscheiben weist eine Vielzahl von Streifen 3 aus flexiblem Material auf, deren radial innere Enden 3a zwischen zwei Tragscheiben 4 eingeklemmt sind, die den Walzenkern 1 konzentrisch umgeben. Da die beiden Tragscheiben 4 beim dargestellten vorteilhaften Ausführungsbeispiel identisch zueinander ausgebildet sind, werden auch für beide Tragscheiben und die an ihnen vorgesehenen einzelnen Bestandteile die gleichen Bezugszeichen verwendet. Die Streifen 3 bestehen aus flexiblem Material, vorzugsweise Schaumstoff, mit möglichst geringer Wasseraufnahme. Es kann sich dabei um geschlossenzelligen Schaumstoff oder auch offenzelligen Schaumstoff handeln, wobei im letzteren Fall die Zellen oder Poren jedoch möglichst klein sein sollten, um die Wasseraufnahme klein zu halten. Gegebenenfalls kann für die Streifen 3 auch anderes Material verwendet werden, wie es in der vorgenannten Druckschrift beschrieben ist. Die Streifen 3 verjüngen sich jeweils zu ihren freien Enden 3b hin, so daß zwischen benachbarten Streifen 3 sektorförmige Lücken 5 gebildet sind.

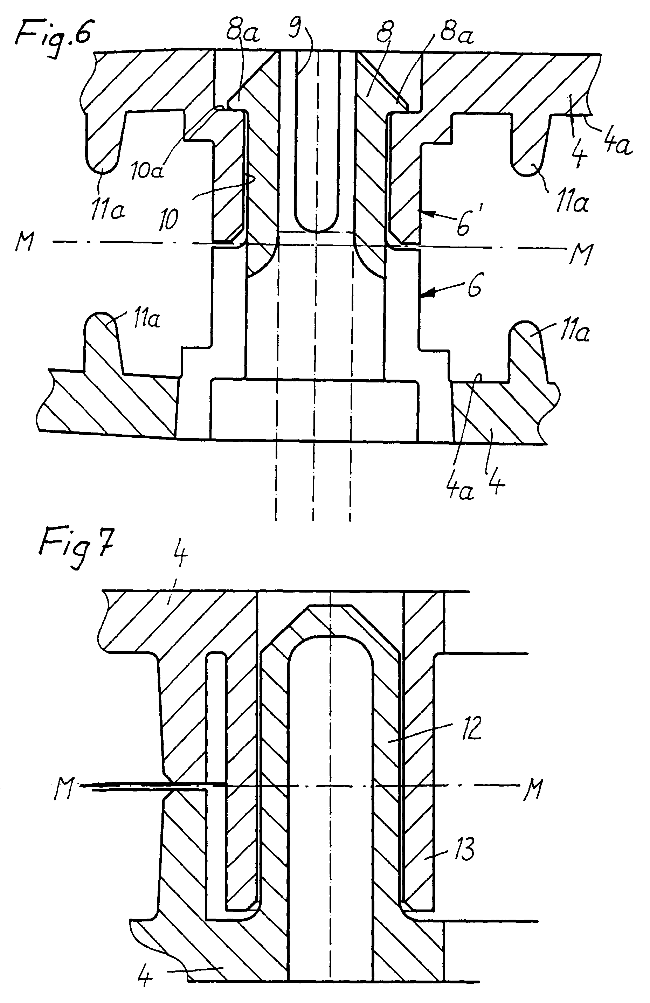

Da bei dem gezeigten Ausführungsbeispiel beide Tragscheiben 4 identisch zueinander ausgebildet sind, wird nachfolgend nur eine der beiden Tragscheiben 4 beschrieben. Diese Tragscheibe 4 ist als Kunststoffspritzteil ausgebildet und weist mehrere parallel zur Walzenachse bzw. Scheibenachse A angeordnete Bolzen 6 auf. Beim gezeigten Ausführungsbeispiel ist jedem der Streifen 3 ein solcher Bolzen 6 zugeordnet, der in ein entsprechendes Loch 7 des Streifens 3 eingreift. Bei dem gezeigten vorteilhaften Ausführungsbeispiel erstreckt sich jeder Bolzen 6 annähernd bis zu einer zwischen den beiden Tragscheiben 4 verlaufenden radialen Mittelebene M-M. In Umfangsrichtung der Tragscheibe ist an jedem zweiten Bolzen 6 ein Verrastungskopf 8 angeordnet. Bolzen 6, Verrastungskopf 8 und Tragscheibe 4 sind aus Kunststoff einstückig gespritzt. Der Verrastungskopf 8 weist zwei Verrastungsvorsprünge 8a auf und ist der Länge nach mit einem Schlitz 9 versehen. Die zwischen den Bolzen 6 liegenden Bolzen 6'' sind jeweils mit einem Loch 10 versehen, in welches der Verrastungskopf 8 der gegenüberliegenden Tragscheibe 4 eingreift. Die Rastvorsprünge 8a sind dabei, wie aus Figur 6 ersichtlich ist, hinter einem Absatz 10a des Loches 10 eingerastet. Da nur jeder zweite Bolzen 6 mit einem Rastkopf 8 versehen ist und die dazwischenliegenden Bolzen 6' jeweils mit einem Loch 10, sind die beiden Tragscheiben identisch zueinander und können mit einem einzigen Werkzeug hergestellt werden. Bei der Montage wird lediglich die eine Tragscheibe gegenüber der anderen um den Winkelabstand zweier benachbarter Bolzen 6, 6' gegeneinander verdreht, so daß gemäß Figur 6 der Rastkopf 8 in das Loch 10 der gegenüberliegenden Tragscheibe einrasten kann. In ein Loch 7 eines Streifens 3 greift dann je zur Hälfte ein Zapfen 6 und ein Zapfen 6' ein.

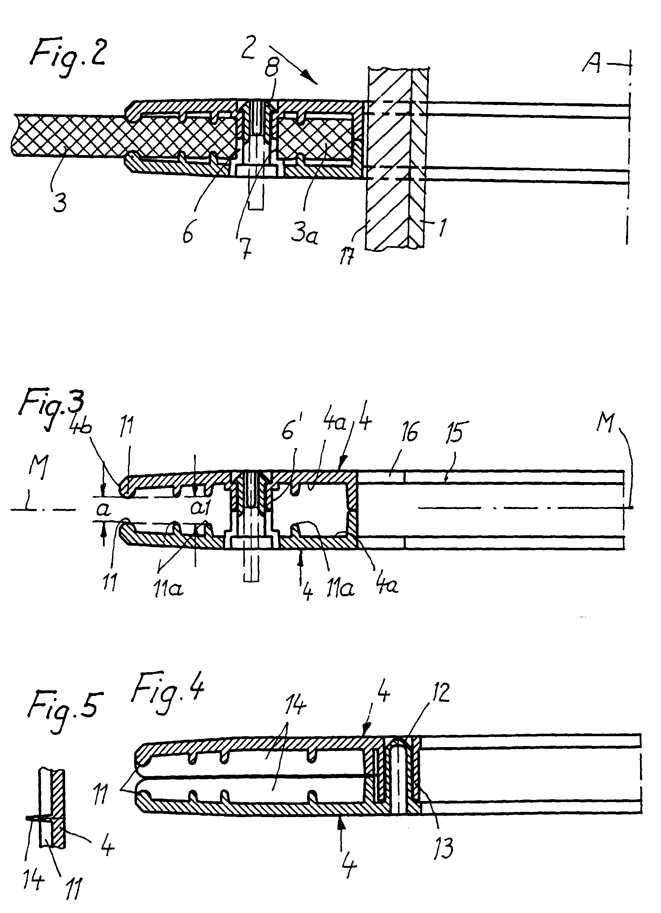

Wenn die Streifen 3 aus normalem, unverstärktem Schaumstoff bestehen, dann ist es wichtig, daß der Bereich des Loches 7 möglichst vollständig entlastet ist, um ein Reißen des Schaumstoffes in diesem Bereich zu verhindern. Aus diesem Grund weist die Tragscheibe 4 an ihrer der anderen Tragscheibe zugekehrten Innenseite 4a mehrere Vorsprünge auf, die sich in das Material der Streifen 3 eindrücken sollen, ohne jedoch einzuschneiden. Die Vorsprünge sind zweckmäßig als konzentrisch zur Scheibenachse A angeordnete Ringwulste 11, 11a ausgebildet. Im fertigmontierten Zustand stehen die Ringwulste 11, 11a der einen Tragscheibe den entsprechenden Ringwulsten 11, 11a der anderen Tragscheibe direkt gegenüber, wie es aus den Figuren 2 und 3 ersichtlich ist. Hierdurch drücken sich die Ringwulste 11, 11a in den Schaumstoff der Streifen 3 ein. Die Eindrücktiefe und die Form der Ringwulste 11, 11a müssen auf das jeweilige Material der Streifen 3, insbesondere auf den jeweils verwendeten Schaumstoff so abgestimmt sein, daß einerseits die Streifen 3 ausreichend gegen Herausziehen gesichert sind und andererseits die Ringwulste 11, 11a keine Kerbwirkung auf den Schaumstoff ausüben. Durch die radial außerhalb der Bolzen 6, 6' liegenden Ringwulste 11, 11a werden die Auszugskräfte vollständig aufgenommen, so daß das Loch 7 im Streifen 3 entlastet ist. Die Bolzen 6, 6' dienen bei der Montage in erster Linie als Positionierhilfe. Um ein Aufbiegen der Tragscheiben, insbesondere am äußeren Umfang, zu verhindern, wurde bei jeder der Tragscheiben 4 zu ihrem äußeren Umfang 4b hin eine Vorspannung vorgesehen. Diese Vorspannung wird dadurch erreicht, daß der gegenseitige axiale Abstand a der am äußeren Umfang der beiden Scheiben einander gegenüberstehenden Ringwulste 11 in unbelastetem Zustand, d.h. wenn gemäß Figur 3 kein Streifen zwischen die beiden Tragscheiben 4 eingesetzt ist, kleiner ist als der gegenseitige axiale Abstand a1 von radial weiter innen liegenden Ringwulsten 11a. Wenn dann gemäß Figur 2 ein Streifen 3 zwischen die beiden Tragscheiben 4 eingeklemmt ist, dann werden alle Ringwulste 11, 11a etwa mit der gleichen Eintauchtiefe in den Schaumstoff eingedrückt.

Als Montagehilfe sind ferner an jeder Tragscheibe 4 mindestens zwei parallel zur Scheibenachse A angeordnete Zentrierstifte 12 vorgesehen und in Umfangsrichtung versetzt zu diesen mindestens zwei Zentrierhülsen 13. Die Zentrierstifte 12 und die Zentrierhülsen 13 erstrecken sich dabei jeweils über die radiale Mittelebene M-M hinaus. Jeweils ein Zentrierstift 12 der einen Tragscheibe 4 greift in eine Zentrierhülse 13 der gegenüberliegenden Tragscheibe ein, wie es in Figur 6 dargestellt ist. Bei der Montage gelangen zunächst die Zentrierstifte 12 in Eingriff mit den Zentrierhülsen 13, bevor die Rastköpfe 8a in den Bereich der Bolzen 6' und ihrer Löcher 10 gelangen. Mittels der Zentrierstifte 12 und der Zentrierhülsen 13 werden also die Rastköpfe 8a gegenüber den Bolzen 6' und ihren Löchern 10 vorzentriert. Das Zusammendrücken der Tragscheiben und das Einrasten der Rastköpfe in die Löcher 10 wird hierdurch erleichtert.

Weiterhin sind an jeder Tragscheibe 4 mehrere radial verlaufende Justierrippen 14 vorgesehen, die jeweils zwischen zwei benachbarte Streifen 13 eingreifen. Der Zweck dieser Justierrippen wird nachstehend noch näher erläutert.

Schließlich weist jede Tragscheibe 4 eine kreisrunde Zentralöffnung 15 auf, mit der sie auf dem Walzenkern 1 aufliegt. Am Rand dieser Öffnung ist mindestens eine Ausnehmung 16 für den Eingriff eines oder mehrerer am Walzenkern drehfest angeordneter Mitnehmer 17 vorgesehen.

Bei der Montage der Arbeitsscheiben 2 wird zunächst eine der Tragscheiben 4 auf eine horizontale Unterlage gelegt. Dann werden die Streifen 3 nacheinander mit ihren inneren Enden 3a auf diese Tragscheibe 4 so aufgelegt, daß die Bolzen 6, 6' jeweils in das am inneren Ende 3a jedes Streifens 3 vorgesehene Loch 7 eingreifen. Gleichzeitig wird aber auch jedes radial innere Ende 3a zwischen zwei der Justierrippen 14 gelegt. Die Justierrippen sorgen dabei dafür, daß jeder Streifen 3 tatsächlich auch in radialer Richtung ausgerichtet ist. Irgendwelche Fertigungsungenauigkeiten der Streifen können sich nicht über den Umfang der Tragscheibe summieren. Außerdem sorgen die Justierrippen 14 in fertigmontiertem Zustand auch dafür, daß die inneren Enden 3a der Streifen 3 in Umfangsrichtung der Tragscheiben biegefest mit diesem verbunden sind. Nachdem alle Streifen 3 auf die unten liegende Tragscheibe gelegt wurden wird die obere Tragscheibe über die untere Tragscheibe gebracht und zunächst durch die Zentrierbolzen 12 und die Zentrierhülsen 13 in Umfangsrichtung vorzentriert. Beim Zusammendrücken beider Tragscheiben rasten dann die Rastköpfe 8 mit ihren Rastvorsprüngen 8a an den Absätzen 10a der Löcher 10 ein. Damit ist die Montage beendet.

Um den Montageaufwand noch weiter zu verringern, könnten mehrere Streifen 3 mit einem an ihre inneren Enden angrenzenden Ring oder einem Ringsegment aus einem Stück flexiblem Materials, insbesondere Schaumstoff, bestehen. In diesem Fall ist dann der Ring oder das Ringsegment mit Löchern für den Eingriff der Bolzen 6, 6' versehen. Die Justierrippen 14 können dann entfallen.

## Patentansprüche

1. Arbeitswalze, insbesondere für Fahrzeugwaschanlagen, mit einem rotierend antreibbaren Walzenkern und mit mehreren, axial nebeneinander auf dem Walzenkern angeordneten, diesen konzentrisch umgebenden Arbeitsscheiben aus flexiblem Material, wobei jede Arbeitsscheibe eine Vielzahl von Streifen aufweist, die gegebenenfalls im Bereich ihrer inneren Enden in Umfangsrichtung jeweils die größte Breite aufweisen und zu ihren radial äußeren, freien Enden hin verjüngt sind, und deren in Bezug auf die Walzenachse radial inneren Enden oder daran angrenzende Bereiche zwischen jeweils zwei den Walzenkern konzentrisch umgebenden Tragscheiben aus Kunststoff eingeklemmt sind, die durch mehrere parallel zur Scheiben- bzw. Walzenachse angeordnete, in Löcher der Tragscheiben eingreifende Bolzen miteinander verbunden sind, **dadurch gekennzeichnet**, daß die beiden Tragscheiben (4) und die Bolzen (6, 6') aus Kunststoff gespritzt sind, wobei die Bolzen (6, 6') mit der dazugehörigen Tragscheibe (4) aus einem Stück bestehen, und daß die freien Enden (8) zumindest eines Teiles der Bolzen in beim Spritzen gebildete Löcher (19) der gegenüberliegenden Tragscheibe einrastbar sind.

2. Arbeitswalze nach Anspruch 1, **dadurch gekennzeichnet**, daß zumindest eine der Tragscheiben (4) an ihrer der anderen Tragscheibe zugekehrten Innenseite (4a) mehrere Vorsprünge (11, 11a) aufweist, die sich in das Material der Streifen (3) eindrücken.

3. Arbeitswalze nach Anspruch 2, **dadurch gekennzeichnet**, daß die Vorsprünge als konzentrisch zur Scheibenachse (A) angeordnete Ringwulste (11, 11a) ausgebildet sind.

4. Arbeitswalze nach Anspruch 2 oder 3, **dadurch gekennzeichnet**, daß die Vorsprünge bzw. Ringwulste (11, 11a) an den Innenseiten (4a) beider Tragscheiben vorgesehen und einander gegenüberstehend angeordnet sind.

5. Arbeitswalze nach Anspruch 3 und 4, **dadurch gekennzeichnet**, daß einer (11) der Ringwulste am äußeren Umfang (4b) der Tragscheibe (4) angeordnet ist.

6. Arbeitswalze nach Anspruch 5, **dadurch gekennzeichnet**, daß der gegenseitige axiale Abstand (a) der am äußeren Umfang (4b) der beiden Tragscheiben (4) einander gegenüberstehenden Ringwulste (11) in unbelastetem Zustand kleiner ist als der gegenseitige axiale Abstand (a1) von radial weiter innen liegenden Ringwulsten (11a).

7. Arbeitswalze nach einem der vorhergehenden Ansprüche, **dadurch gekennzeichnet**, daß für jeden Streifen (3) ein Bolzen (6, 6') vorgesehen ist, der in ein entsprechendes Loch (7) des Streifens eingreift.

8. Arbeitswalze nach Anspruch 7, **dadurch gekennzeichnet**, daß beide Tragscheiben (4) identisch zueinander ausgebildet sind, daß sich hierbei jeder Bolzen (6, 6') annähernd bis zu einer zwischen beiden Tragscheiben (4) verlaufenden, radialen Mittelebene (M-M) erstreckt, daß in Umfangsrichtung an jedem zweiten Bolzen (6) ein Verrastungskopf (8) angeordnet ist und daß die dazwischenliegenden Bolzen (6') jeweils mit einem Loch (10) versehen sind, in welches ein Verrastungskopf (8) der gegenüberliegenden Tragscheibe (4) eingreift und verrastet ist.

9. Arbeitswalze nach einem der vorhergehenden Ansprüche, **dadurch gekennzeichnet**, daß an jeder Tragscheibe (4) zwischen zwei benachbarten Streifen (3) radial verlaufende Justierrippen vorgesehen sind.

10. Arbeitswalze nach Anspruch 8, **dadurch gekennzeichnet**, daß an jeder Tragscheibe (4) mindestens zwei parallel zur Scheibenachse angeordnete Zentrierstifte (12) vorgesehen sind, daß in Umfangsrichtung zwischen den Zentrierstiften (12) Zentrierhülsen (13) vorgesehen sind, daß sich Zentrierstifte (12) und Zentrierhülsen (13) jeweils über die radiale Mittelebene (M-M) hinaus erstrecken und daß jeweils ein Zentrierstift (12) der einen Tragscheibe (4) in eine Zentrierhülse (13) der gegenüberliegenden Tragscheibe eingreift.

11. Arbeitswalze nach einem der vorhergehenden Ansprüche, **dadurch gekennzeichnet**, daß jede Tragscheibe (4) eine kreisrunde, zentrale Öffnung (15) und am Rand dieser Öffnung mindestens eine Ausnehmung (16) für den Eingriff eines am Walzenkern (1) drehfest angeordneten Mitnehmers (17) aufweist.

12. Arbeitswalze nach einem der verhergehenden Ansprüche, **dadurch gekennzeichnet**, daß mehrere Streifen mit einem an die inneren Enden der Streifen angrenzenden Ring oder Ringsegment aus einem Stück flexiblem Materials bestehen.
